# EUROPEAN PATENT APPLICATION

(11) **EP 3 716 191 A1**
(43) Date of publication of application: **30.09.2020**
(21) Application number: 19759924.4
(22) Date of filing: 28.01.2019
(51) Int. Cl.: G06Q 30/06

(54) **COMMODITY SETTLEMENT METHOD AND APPARATUS AND ELECTRONIC DEVICE**

(30) Priority: 01.03.2018 CN 201810170622
(71) Applicant: ALIBABA GROUP HOLDING LIMITED, George Town, Grand Cayman (KY)
(72) Inventor: YANG, Fan, Hangzhou, Zhejiang 311121 (CN)
(74) Representative: Goddar, Heinz J.
(86) International application number: PCT/CN2019/073359
(87) International publication number: WO 2019/165866

(57) **Abstract**

Implementations of the present specification provide product checkout methods and apparatuses, and electronic devices. The method includes the following: scanning, by a client, a product barcode to enter a shopping cart interface, where the shopping cart interface is used to display product information obtained through barcode scanning; sending, by the client, a checkout request to a server when obtaining a checkout instruction, where the checkout request carries the product information of a shopping cart; generating, by the server, a payment code based on the product information of the shopping cart when receiving the checkout request, and pushing the payment code to a checkout terminal; and displaying, by the checkout terminal, the received payment code, so that the client scans the payment code to complete payment.

## Description

### CROSS-REFERENCE TO RELATED APPLICATIONS

The present patent application claims priority to Chinese Patent Application No. 2018101706227, filed on March 1, 2018 and entitled "PRODUCT CHECKOUT METHOD AND APPARATUS AND ELECTRONIC DEVICE", which is incorporated herein by reference in its entirety.

### TECHNICAL FIELD

Implementations of the present specification relate to the field of Internet technologies, and in particular, to product checkout methods and apparatuses, and electronic devices.

### BACKGROUND

With the appearance of self-service shops, customers do not need to perform checkout through cashiers, and therefore can obtain distinctive shopping experience.

In related technologies, to implement self-service shops, a large quantity of cameras and devices configured to support unattended checkout need to be installed in the shops. Therefore, costs stay high, making it difficult for self-service shops to popularize.

### SUMMARY

Implementations of the present specification provide product checkout methods and apparatuses, and electronic devices.

According to a first aspect of the implementations of the present specification, a product checkout method is provided, where the method includes the following: scanning, by a client, a product barcode to enter a shopping cart interface, where the shopping cart interface is used to display product information obtained through barcode scanning; sending, by the client, a checkout request to a server when obtaining a checkout instruction, where the checkout request carries the product information of a shopping cart; generating, by the checkout server, a payment code based on the product information of the shopping cart when receiving the checkout request, and pushing the payment code to a checkout terminal; and displaying, by the checkout terminal, the received payment code, so that the client scans the payment code to complete payment.

According to a second aspect of the implementations of the present specification, a product checkout method is provided, where the method includes the following: scanning, by a client, a product barcode to enter a shopping cart interface, where the shopping cart interface is used to display product information obtained through barcode scanning; sending, by the client, a checkout request to a server when obtaining a checkout instruction, where the checkout request carries the product information of a shopping cart; and generating, by the server, a payment code based on the product information of the shopping cart when receiving the checkout request, and pushing the payment code to the client, so that the client displays the payment code for payment.

According to a third aspect of the implementations of the present specification, a product checkout apparatus is provided, where the apparatus includes the following: a scanning unit, configured for a client to scan a product barcode to enter a shopping cart interface, where the shopping cart interface is used to display product information obtained through barcode scanning; a sending unit, configured for the client to send a checkout request to a server when obtaining a checkout instruction, where the checkout request carries the product information of a shopping cart; a generation unit, configured for the checkout server to generate a payment code based on the product information of the shopping cart when receiving the checkout request, and push the payment code to a checkout terminal; and a checkout unit, configured for the checkout terminal to display the received payment code, so that the client scans the payment code to complete payment.

According to a fourth aspect of the implementations of the present specification, a product checkout apparatus is provided, where the apparatus includes the following: a scanning unit, configured for a client to scan a product barcode to enter a shopping cart interface, where the shopping cart interface is used to display product information obtained through barcode scanning; a sending unit, configured for the client to send a checkout request to a server when obtaining a checkout instruction, where the checkout request carries the product information of a shopping cart; and a generation unit, configured for the server to generate a payment code based on the product information of the shopping cart when receiving the checkout request, and push the payment code to the client, so that the client displays the payment code for payment.

According to a fifth aspect of the implementations of the present specification, an electronic device is provided, including: a processor; and a memory, configured to store an instruction executable by the processor, where the processor is configured to implement the product checkout method according to any one of the previous implementations.

The present specification provides a product checkout solution. A customer can add desired products to a shopping cart by scanning barcodes of the products through a client, so that the customer can complete self-service product selection. In addition, when checkout is needed, a server can generate a payment code and send the payment code to a checkout terminal. As such, the customer can complete product payment by using the client to scan the payment code displayed by the checkout terminal. In such a shopping checkout method, the customer can complete shopping by using the client, and can complete fast payment by using the checkout terminal, thereby greatly reducing a checkout time. For the customer, shopping experience is better because the customer is not monitored in real time. For a merchant, only the checkout terminal needs to be disposed, and there is no need to invest a large amount of money. Such practice can greatly reduce operation costs and needs for market access, thereby facilitating popularization of self-service shops. In one aspect, because real-time recognition on images captured by a camera is not needed, server processing efficiency can be improved, and a response time can be reduced.

### BRIEF DESCRIPTION OF DRAWINGS

FIG. 1 is a flowchart illustrating a product checkout method, according to an implementation of the present specification;
FIG. 2 is a schematic diagram illustrating product barcode scanning performed by a client, according to an implementation of the present specification;
FIG. 3 is a schematic diagram illustrating a shopping cart interface, according to an implementation of the present specification;
FIG. 4 is a schematic diagram illustrating a checkout terminal, according to an implementation of the present specification;
FIG. 5 is a flowchart illustrating a product checkout method, according to an implementation of the present specification;
FIG. 6 is a schematic module diagram illustrating a product checkout apparatus, according to an implementation of the present specification; and
FIG. 7 is a schematic module diagram illustrating a product checkout apparatus, according to an implementation of the present specification.

### DESCRIPTION OF IMPLEMENTATIONS

Example implementations are described in detail here, and examples of the example implementations are presented in the accompanying drawings. When the following description relates to the accompanying drawings, unless specified otherwise, same numbers in different accompanying drawings represent same or similar elements. Implementations described in the following example implementations do not represent all implementations consistent with the present specification. Instead, they are merely examples of apparatus and methods consistent with some aspects of the present specification as set forth in the appended claims.

The terms used in the present specification are merely for illustrating specific implementations, and are not intended to limit the present specification. The terms "a", "the", and "said" of singular forms used in the present specification and the appended claims are also intended to include plural forms, unless otherwise specified in the context clearly. It should also be understood that, the term "and/or" used here indicates and includes any or all possible combinations of one or more associated listed items.

It should be understood that, although terms such as "first", "second", and "third" are used in the present specification to describe various information, the information is not limited by these terms. These terms are only used to differentiate between information of the same type. For example, without departing from the scope of the present specification, first information can also be referred to as second information, and similarly, second information can also be referred to as first information. Depending on the context, for example, the word "if" used here can be explained as "while", "when", or "in response to determining".

In related technologies, to implement self-service shops, a large quantity of cameras and devices configured to support unattended checkout need to be installed in the shops. For example, behavior of a customer in a shop needs to be monitored in real time, and a product selected by the customer needs to be recognized. In addition, an identity of the customer needs to be determined based on a facial recognition technology, so as to automatically complete payment by connecting to the customer's fund account during checkout. It can be figured out that, for the customer, privacy experience is poor because the customer is monitored in real time. For a merchant, high operation costs are needed, and needs for market access are excessively high and popularization is unavailable. On the other hand, to avoid missing a product selected by the customer and therefore causing a loss to the shop, images captured by a camera need to be recognized in real time, and a calculation amount of an image recognition system is very large.

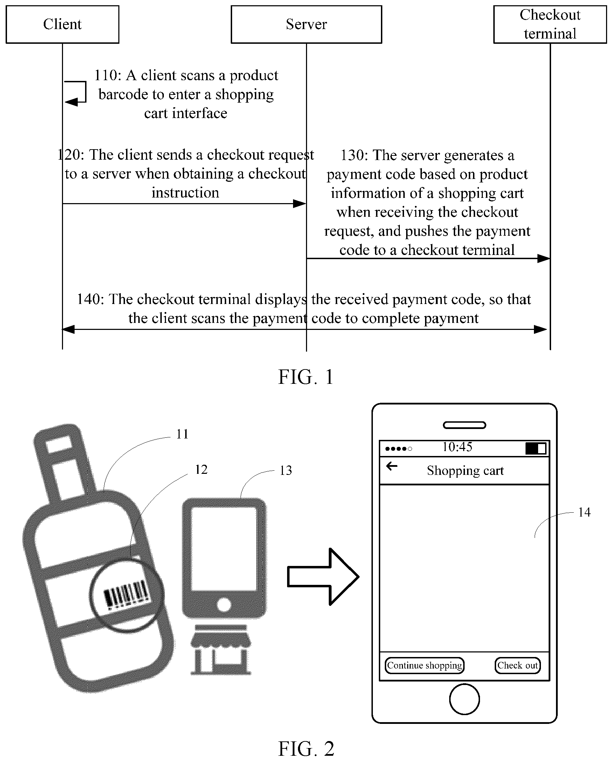

The following can describe an implementation of a product checkout method in the present specification with reference to an example shown in FIG. 1. As shown in FIG. 1, the method can include the following steps:

Step 110: A client scans a product barcode to enter a shopping cart interface, where the shopping cart interface is used to display product information obtained through barcode scanning.

Generally, the client can be a customer terminal that combines software and hardware, for example, a smartphone with a shopping application (APP) installed. After starting the shopping APP, the customer can start a scanning device in the shopping APP to scan a product barcode. Or, the client can be a shopping applet in a certain APP, for example, a shopping applet in an e-wallet APP. The applet can be an open system provided in the APP, and a third party can independently develop, based on the development system, some applets that can be mounted on the APP. In the implementation, the customer can implement all or some functions for shopping by using the applet, for example, adding products or performing checkout. Or, the client can be an HTML5 page. After starting the HTML5 page and scanning a product barcode by using a scanning device, the customer can enter a shopping cart interface.

As shown in FIG. 2, a client 13 can scan a product barcode 12 attached on a product 11, so that the client 13 can enter a shopping cart interface 14.

In an implementation, an agreement needs to be signed if the customer enters the shopping cart interface for the first time. Generally, an agreement signing page and agreement declaration content can be displayed in the client. If the customer agrees, the customer can choose to confirm the agreement so as to enter the shopping cart interface.

Step 120: The client sends a checkout request to a server when obtaining a checkout instruction, where the checkout request carries the product information of a shopping cart.

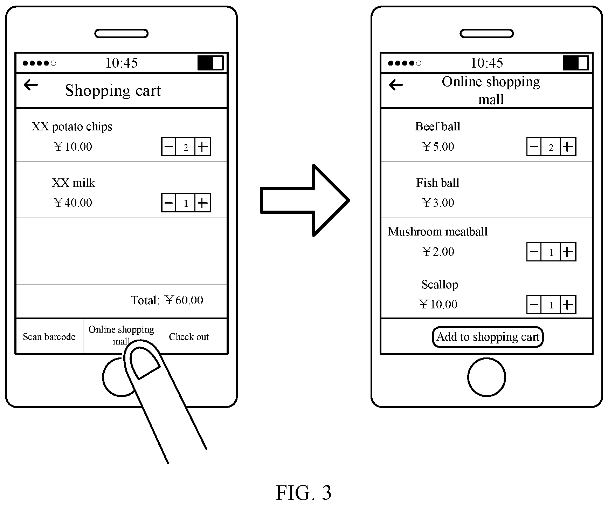

The customer can scan different product barcodes at multiple times to add products to the shopping cart. Generally, the shopping cart interface can further provide buttons for operating product information. For example, in FIG. 3, for each added product, the customer can delete the product, increase or decrease a product quantity, and add a comment, etc. and can further, for example, clear the shopping cart by one tap.

In an implementation, a portal to an online shopping mall can further be added to the shopping cart interface. As such, the customer can select products through the online shopping mall in addition to scanning product barcodes. As shown in FIG. 3, the customer can tap an online shopping mall button provided on the shopping cart interface to enter the online shopping mall. In the online shopping mall, the customer can select a desired product and a product quantity, and add the product to the shopping cart.

In an implementation, the customer can generate a checkout instruction by tapping a checkout button on the shopping cart interface, and then the client can send a checkout request to the server when the client obtains the checkout instruction.

Step 130: The checkout server generates a payment code based on the product information of the shopping cart when receiving the checkout request, and pushes the payment code to a checkout terminal.

In an implementation, the product information can include at least a product name, a product unit price, and a product quantity. As such, the server can calculate a total price of all products based on unit prices and quantities of all the products, and generate a payment code (for example, a two-dimensional payment code) for the customer to perform payment. In some implementations, the product information can further include a product image and a product description, etc.

In an implementation, step 110 can specifically include the following: scanning, by the client, the product barcode to enter the shopping cart interface, and sending current location information to the server; and step 130 can specifically include the following: determining, by the server based on the location information of the client when receiving the checkout request, a shop in which the client is currently located; and generating, by the server, the payment code based on the product information of the shopping cart, and pushing the payment code to a checkout terminal in the determined shop.

In an implementation, the location information can be a location recorded by a positioning apparatus of a terminal of the client, and the location can be coordinate information representing a geographical location. A common positioning apparatus can uses a U.S. GPS satellite navigation system, a European "Galileo" satellite navigation system, a Russian GLONASS satellite navigation system, or a Chinese "Beidou" satellite navigation system, etc. or a similar combination. Such coordinate information for positioning is also referred to as mobile positioning.

In an implementation, the location information can be obtained by a network device through conversion based on signal characteristics of the terminal of the client. For example, the location information can be a location obtained by a network operator based on a base station coverage principle through positioning calculation of a base station by using signals of the terminal. In the latter positioning calculation, the terminal generally measures downlink pilot signals of different base stations to obtain time of arrival (TOA) of downlink pilots of different base stations or a time difference of arrival (TDOA) between downlink pilots of different base stations. A location of the terminal can be calculated generally by using a trigonometric formula estimation algorithm based on the measurement result and with reference to coordinates of the base station. An actual location estimation algorithm needs to consider a case with multiple base stations (three or more). There are multiple algorithms in the existing technology, which is relatively complex. Generally, a measurement generated by more base stations indicates higher measurement precision and better positioning performance. In addition, the location information can also be a relatively precise location jointly positioned and obtained by using assistant positioning of a base station in combination with the positioning apparatus in the terminal.

By using the LBS technology, the location information of the client can be used to determine a specific shop in which the current customer is located.

In an implementation, the checkout request further carries location information of the client; and step 130 can specifically include the following: determining, by the server based on the location information of the client when receiving the checkout request, a shop in which a customer is located; and generating, by the server, the payment code based on the product information of the shopping cart, and pushing the payment code to a checkout terminal in the determined shop.

A difference between the current implementation and the previous implementation lies in that a time for the client to send the location information is different. In the previous implementation, the location information is sent after the product barcode is scanned. In the current implementation, the location information is sent after the checkout request is received.

In an implementation, step 110 can specifically include the following: scanning, by the client, the product barcode to enter the shopping cart interface, and establishing short-range wireless communication with a current shop and obtaining a shop identifier; where the checkout request further carries the shop identifier; and step 130 can specifically include the following: determining, by the server based on the shop identifier when receiving the checkout request, a shop in which a customer is located; and generating, by the server, the payment code based on the product information of the shopping cart, and pushing the payment code to a checkout terminal in the determined shop.

In the implementation, after scanning the product barcode, the client needs to establish short-range wireless communication with the current shop, so as to obtain the pushed shop identifier. A specific shop can be determined based on the shop identifier, that is, a one-to-one mapping relationship exists between a shop name and the shop identifier.

In an implementation, step 120 can specifically include the following: establishing, by the client when obtaining the checkout instruction, short-range wireless communication with a current shop and obtaining a shop identifier; and sending, by the client, the checkout request to the server, where the checkout request carries the shop identifier; and step 130 can specifically include the following: determining, by the server based on the shop identifier when receiving the checkout request, a shop in which a customer is located; and generating, by the server, the payment code based on the product information of the shopping cart, and pushing the payment code to a checkout terminal in the determined shop.

A difference between the current implementation and the previous implementation lies in that a time for the client to establish short-range wireless communication with the current shop and obtain the shop identifier is different. In the previous implementation, the client establishes short-range wireless communication with the current shop and obtains the shop identifier after the product barcode is scanned. In the current implementation, the client establishes short-range wireless communication with the current shop and obtains the shop identifier after the checkout instruction is obtained.

In an implementation, the establishing short-range wireless communication with a current shop and obtaining a shop identifier specifically includes the following: after scanning a two-dimensional code that is used to establish short-range wireless communication and that is provided by the checkout terminal, establishing, by the client, short-range wireless communication with the checkout terminal, and obtaining a shop identifier pushed by the checkout terminal.

The short-range wireless communication can include Bluetooth, infrared, a wireless local area network, Wi-Fi, ultra-wideband communication, ZigBee, or near field communication, etc.

Step 140: The checkout terminal displays the received payment code, so that the client scans the payment code to complete payment.

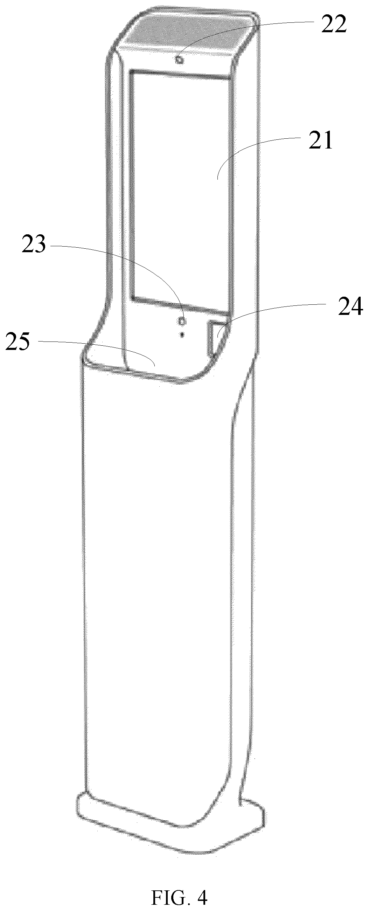

FIG. 4 is a schematic diagram of an example checkout terminal. A screen 21 is disposed on the checkout terminal, and can display the received payment code. The customer can use the client to scan the payment code to complete payment. Generally, the checkout terminal can be disposed on a dedicated checkout channel in the shop. The customer can leave quickly after performing payment successfully by using the checkout terminal, thereby improving checkout efficiency. The checkout terminal can further be provided with an infrared sensing device 23. When the customer stands in front of the checkout terminal, the customer can be sensed by the infrared sensing device 23, so as to activate the checkout terminal from a sleep state. In a preferred solution, the customer can send the checkout request to the server only after the checkout terminal is activated, so that the checkout terminal can display the payment code. As such, it can be ensured that a payment code scanned by the customer is a payment code needed by the customer for payment.

The present specification provides a product checkout solution. A customer can add desired products to a shopping cart by scanning barcodes of the products through a client, so that the customer can complete self-service product selection. In addition, when checkout is needed, a server can generate a payment code and send the payment code to a checkout terminal. As such, the customer can complete product payment by using the client to scan the payment code displayed by the checkout terminal. In such a shopping checkout method, the customer can complete shopping by using the client, and can complete fast payment by using the checkout terminal, thereby greatly reducing a checkout time. For the customer, shopping experience is better because the customer is not monitored in real time. For a merchant, only the checkout terminal needs to be disposed, and there is no need to invest a large amount of money. Such practice can greatly reduce operation costs and needs for market access, thereby facilitating popularization of self-service shops. In one aspect, because real-time recognition on images captured by a camera is not needed, server processing efficiency can be improved, and a response time can be reduced.

In an implementation, the implementation shown in FIG. 1 can further include the following: performing, by the checkout terminal, risk detection when receiving the payment code scanned by the client to perform payment; and notifying a shop staff member when there is a risk.

It should be noted that, when it is determined that there is a risk, the checkout terminal can generally report an alarm imperceptible by the customer, for example, notify a shop staff member for the shop staff member to manually re-check products of the customer with the risk.

In an implementation, the risk detection can include the following: obtaining and recognizing products that are to be actually checked out by a customer and that are photographed by a photographing device; and determining that there is a risk when the products to be actually checked out by the customer are different from products in the shopping cart; or determining that there is no risk when the products to be actually checked out by the customer are the same as products in the shopping cart.

FIG. 4 is a schematic diagram of an example checkout terminal. A photographing device 22, for example, a camera, is disposed on the checkout terminal. In an implementation method, the checkout terminal can upload an obtained product image to the server or a third-party image recognition server for recognition, so as to obtain a returned recognized product. In another implementation method, the checkout terminal can locally recognize the actually checked-out products of the customer that are photographed by the photographing device. The products can be recognized based on an existing general image recognition technology, and details are omitted for simplicity in the present specification. The checkout terminal in FIG. 4 can further be provided with a storage 25 for placing products. In actual applications, the customer can place selected products in the storage 25, so that the photographing device 22 can captures image of the products, and the checkout terminal can obtain and recognize the products to be actually checked out by the customer.

Further, when the products to be actually checked out by the customer are the same as the products in the shopping cart, it is determined whether a specified product exists in the products to be actually checked out by the customer; and it is determined that there is a risk when the specified product exists in the products to be actually checked out by the customer.

In actual applications, shops can specify some special products, such as expensive products (for example, tobacco and wine). When the customer purchases these specified products, risk degrees of these products are significantly higher than risk degrees of other products.

According to the implementation, during checkout of the customer, the checkout terminal can recognize products to be actually checked out by the customer, so as to avoid a risk that the products to be actually checked out by the customer are different from the selected products in the shopping cart, thereby effectively ensuring benefits of shops.

In an implementation, the risk detection can include the following: obtaining a first total weight, detected by a weighing device, of products to be actually checked out by a customer; calculating a second total weight based on weights and a quantity of products in the shopping cart; and determining that there is a risk when an absolute value of a difference between the first total weight and the second total weight exceeds a threshold; or determining that there is no risk when an absolute value of a difference between the first total weight and the second total weight does not exceed a threshold.

In actual applications, a shop can input a weight of each product in advance. As such, it can be determined whether there is a risk by comparing the first total weight of the products to be actually checked out by the customer with the second total weight of the products in the shopping cart. Generally, in an ideal state, when the first total weight is the same as the second total weight, it can be considered that the actually checked-out products are the same as the products in the shopping cart, and correspondingly, the threshold can be 0. Certainly, in actual applications, the weighing device may generate a weighing error. Therefore, the threshold can be an empirical value greater than 0, for example, 500 grams or 1 kilogram. In FIG. 4, the storage 25 of the checkout terminal is further provided with a weighting device, and therefore can have a weighting function.

According to the implementation, during checkout of the customer, the checkout terminal can detect whether there is a risk based on a total weight of the products to be actually checked out by the customer, so as to avoid a risk that the products to be actually checked out by the customer are different from the selected products in the shopping cart, thereby effectively ensuring benefits of shops.

In an implementation, the risk detection can include the following: recognizing products corresponding to radio frequency identification tags on products to be actually checked out by a customer; and determining that there is a risk when the products corresponding to the radio frequency identification tags are different from products in the shopping cart; or determining that there is no risk when the products corresponding to the radio frequency identification tags are the same as products in the shopping cart.

The radio frequency identification (RFID) is a communications technology that can identify a specific target by using a radio signal and read and write related data, without a need to establish mechanical or optical contact between an identification system and the specific target. In shops, an RFID tag can be attached on each product. In FIG. 4, an RFID tag scanning device 24 can further be disposed in the checkout terminal. When the customer places the products to be actually checked out into the storage 25, the RFID tag scanning device 24 can recognize a product corresponding to each RFID tag. As such, the checkout terminal can compare recognized products with the products in the shopping cart. It is determined that there is a risk when the product corresponding to the RFID tag is different from a product in the shopping cart; or it is determined that there is no risk when the product corresponding to the RFID tag is the same as a product in the shopping cart.

It should be noted that, the previous risk detection implementations can be combined for application, and detection accuracy can be more effectively improved by using multiple detection methods.

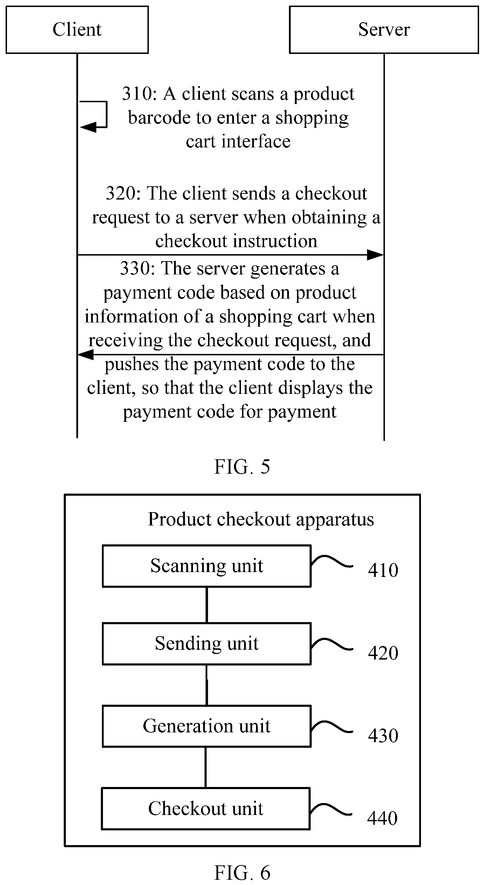

The following can describe an implementation of a product checkout method in the present specification with reference to an example shown in FIG. 5. As shown in FIG. 5, the method can include the following steps:

Step 310: A client scans a product barcode to enter a shopping cart interface, where the shopping cart interface is used to display product information obtained through barcode scanning.

Step 320: The client sends a checkout request to a server when obtaining a checkout instruction, where the checkout request carries the product information of a shopping cart.

Step 330: The server generates a payment code based on the product information of the shopping cart when receiving the checkout request, and pushes the payment code to the client, so that the client displays the payment code for payment.

The current implementation is similar to the implementation shown in FIG. 1. For specific same steps, reference can be made to detailed description in the implementation shown in FIG. 1. The current implementation differs from the implementation in FIG. 1 in that the server generates and then pushes the payment code to the client. In the current implementation, a merchant does not need to dispose a checkout terminal, and can still use a manual collection method. The customer can display the payment code, so that a shop staff member can scan the payment code by using a scanning device for collection, so as to complete checkout.

Corresponding to the previous implementations of the product checkout methods, the present specification further provides implementations of product checkout apparatuses. The apparatus implementations can be implemented by software, hardware, or a combination of hardware and software. Software implementation is used as an example. As a logical apparatus, the product checkout apparatus is formed by reading a corresponding computer program instruction in a non-volatile memory to a memory by a processor of a device accommodating the apparatus. At a hardware level, a hardware structure of the device accommodating the product checkout apparatus in the present specification can include a processor, a network interface, a memory, and a non-volatile memory. In addition, the device accommodating the apparatus in the implementation can generally further include other hardware based on actual product checkout functions, and details are not omitted for simplicity.

Referring to FIG. 6, FIG. 6 is a module diagram illustrating a product checkout apparatus, according to an implementation of the present specification. The apparatus corresponds to the implementation shown in FIG. 1. The apparatus includes the following: a scanning unit 410, configured for a client to scan a product barcode to enter a shopping cart interface, where the shopping cart interface is used to display product information obtained through barcode scanning; a sending unit 420, configured for the client to send a checkout request to a server when obtaining a checkout instruction, where the checkout request carries the product information of a shopping cart; a generation unit 430, configured for the checkout server to generate a payment code based on the product information of the shopping cart when receiving the checkout request, and push the payment code to a checkout terminal; and a checkout unit 440, configured for the checkout terminal to display the received payment code, so that the client scans the payment code to complete payment.

In an optional implementation, the scanning unit 410 specifically includes the following: a scanning subunit, configured for the client to scan the product barcode to enter the shopping cart interface, and send current location information to the server; and the generation unit 430 specifically includes the following: a determining subunit, configured for the server to determine, based on the location information of the client when receiving the checkout request, a shop in which the client is currently located; and a generation subunit, configured for the server to generate the payment code based on the product information of the shopping cart, and push the payment code to a checkout terminal in the determined shop.

In an optional implementation, the scanning unit 410 specifically includes the following: a scanning subunit, configured for the client to scan the product barcode to enter the shopping cart interface, and establish short-range wireless communication with a current shop and obtain a shop identifier; where the checkout request further carries the shop identifier; and the generation unit 430 specifically includes the following: a determining subunit, configured for the server to determine, based on the shop identifier when receiving the checkout request, a shop in which a customer is located; and a generation subunit, configured for the server to generate the payment code based on the product information of the shopping cart, and push the payment code to a checkout terminal in the determined shop.

In an optional implementation, the checkout request further carries location information of the client; and the generation unit 430 specifically includes the following: a determining subunit, configured for the server to determine, based on the location information of the client when receiving the checkout request, a shop in which a customer is located; and a generation subunit, configured for the server to generate the payment code based on the product information of the shopping cart, and push the payment code to a checkout terminal in the determined shop.

In an optional implementation, the sending unit 420 specifically includes the following: an establishment subunit, configured for the client to establish, when obtaining the checkout instruction, short-range wireless communication with a current shop and obtaining a shop identifier; and a sending subunit, configured for the client to send the checkout request to the server, where the checkout request carries the shop identifier; and the generation unit 430 specifically includes the following: a determining subunit, configured for the server to determine, based on the shop identifier when receiving the checkout request, a shop in which a customer is located; and a generation subunit, configured for the server to generate the payment code based on the product information of the shopping cart, and push the payment code to a checkout terminal in the determined shop.

In an optional implementation, the establishing short-range wireless communication with a current shop and obtaining a shop identifier specifically includes the following: after scanning a two-dimensional code that is used to establish short-range wireless communication and that is provided by the self-service terminal, establishing, by the client, short-range wireless communication with the checkout terminal, and obtaining a shop identifier pushed by the checkout terminal.

In an optional implementation, the apparatus further includes the following: a detection subunit, configured for the checkout terminal to perform risk detection when receiving the payment code scanned by the client to perform payment; and a notification subunit, configured to notify a shop staff member when there is a risk.

In an optional implementation, the risk detection subunit specifically includes the following: an acquisition subunit, configured to obtain and recognize products that are to be actually checked out by a customer and that are photographed by a photographing device; and a risk determining subunit, configured to determine that there is a risk when the products to be actually checked out by the customer are different from products in the shopping cart.

In an optional implementation, the apparatus further includes the following: a determining subunit, configured to determine, when the products to be actually checked out by the customer are the same as the products in the shopping cart, whether a specified product exists in the products to be actually checked out by the customer; and the risk determining subunit, configured to determine that there is a risk when the specified product exists in the products to be actually checked out by the customer.

In an optional implementation, the risk detection subunit specifically includes the following: an acquisition subunit, configured to obtain a first total weight, detected by a weighing device, of products to be actually checked out by a customer; a calculation subunit, configured to calculate a second total weight based on weights and a quantity of products in the shopping cart; and a risk determining subunit, configured to determine that there is a risk when an absolute value of a difference between the first total weight and the second total weight exceeds a threshold.

In an optional implementation, the risk detection subunit specifically includes the following: a recognition subunit, configured to recognize products corresponding to radio frequency identification tags on products to be actually checked out by a customer; and a risk determining subunit, configured to determine that there is a risk when the products corresponding to the radio frequency identification tags are different from products in the shopping cart.

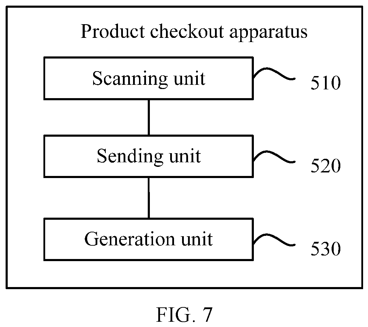

Referring to FIG. 7, FIG. 7 is a module diagram illustrating a product checkout apparatus, according to an implementation of the present specification. The apparatus corresponds to the implementation shown in FIG. 5. The apparatus includes the following: a scanning unit 510, configured for a client to scan a product barcode to enter a shopping cart interface, where the shopping cart interface is used to display product information obtained through barcode scanning; a sending unit 520, configured for the client to send a checkout request to a server when obtaining a checkout instruction, where the checkout request carries the product information of a shopping cart; and a generation unit 530, configured for the server to generate a payment code based on the product information of the shopping cart when receiving the checkout request, and push the payment code to the client, so that the client displays the payment code for payment.

The system, apparatus, module, or unit illustrated in the previous implementations can be implemented by using a computer chip or an entity, or can be implemented by using a product having a certain function. A typical implementation device is a computer, and the computer can be a personal computer, a laptop computer, a cellular phone, a camera phone, a smartphone, a personal digital assistant, a media player, a navigation device, an email receiving and sending device, a game console, a tablet computer, a wearable device, or any combination of these devices.

For an implementation process of functions and roles of each unit in the apparatus, references can be made to an implementation process of corresponding steps in the previous method. Details are omitted here.

Because an apparatus implementation corresponds to a method implementation, for related parts, references can be made to related descriptions in the method implementation. The previously described apparatus implementation is merely an example. The units described as separate parts can or does not have to be physically separate, and parts displayed as units can or does not have to be physical units, can be located in one position, or can be distributed on a plurality of network units. Some or all of the modules can be selected based on actual needs to achieve the objectives of the solutions of the present specification. A person of ordinary skill in the art can understand and implement the implementations of the present specification without creative efforts.

FIG. 6 describes a schematic diagram of internal function modules and a structure of the product checkout apparatus. Essentially, the product checkout apparatus can be an electronic device, including: a processor; and a memory, configured to store an instruction executable by the processor, where the processor is configured to implement the following method: scanning, by a client, a product barcode to enter a shopping cart interface, where the shopping cart interface is used to display product information obtained through barcode scanning; sending, by the client, a checkout request to a server when obtaining a checkout instruction, where the checkout request carries the product information of a shopping cart; generating, by the checkout server, a payment code based on the product information of the shopping cart when receiving the checkout request, and pushing the payment code to a checkout terminal; and displaying, by the checkout terminal, the received payment code, so that the client scans the payment code to complete payment.

Optionally, the scanning, by a client, a product barcode to enter a shopping cart interface specifically includes the following: scanning, by the client, the product barcode to enter the shopping cart interface, and sending current location information to the server; and the generating, by the server, a payment code based on the product information of the shopping cart when receiving the checkout request, and pushing the payment code to a checkout terminal specifically includes the following: determining, by the server based on the location information of the client when receiving the checkout request, a shop in which the client is currently located; and generating, by the server, the payment code based on the product information of the shopping cart, and pushing the payment code to a checkout terminal in the determined shop.

Optionally, the scanning, by a client, a product barcode to enter a shopping cart interface specifically includes the following: scanning, by the client, the product barcode to enter the shopping cart interface, and establishing short-range wireless communication with a current shop and obtaining a shop identifier; where the checkout request further carries the shop identifier; and the generating, by the server, a payment code based on the product information of the shopping cart when receiving the checkout request, and pushing the payment code to a checkout terminal specifically includes the following: determining, by the server based on the shop identifier when receiving the checkout request, a shop in which a customer is located; and generating, by the server, the payment code based on the product information of the shopping cart, and pushing the payment code to a checkout terminal in the determined shop.

Optionally, the checkout request further carries location information of the client; and the generating, by the server, a payment code based on the product information of the shopping cart when receiving the checkout request, and pushing the payment code to a checkout terminal specifically includes the following: determining, by the server based on the location information of the client when receiving the checkout request, a shop in which a customer is located; and generating, by the server, the payment code based on the product information of the shopping cart, and pushing the payment code to a checkout terminal in the determined shop.

Optionally, the sending, by the client, a checkout request to a server when obtaining a checkout instruction specifically includes the following: establishing, by the client when obtaining the checkout instruction, short-range wireless communication with a current shop and obtaining a shop identifier; and sending, by the client, the checkout request to the server, where the checkout request carries the shop identifier; and the generating, by the server, a payment code based on the product information of the shopping cart when receiving the checkout request, and pushing the payment code to a checkout terminal specifically includes the following: determining, by the server based on the shop identifier when receiving the checkout request, a shop in which a customer is located; and generating, by the server, the payment code based on the product information of the shopping cart, and pushing the payment code to a checkout terminal in the determined shop.

Optionally, the establishing short-range wireless communication with a current shop and obtaining a shop identifier specifically includes the following: after scanning a two-dimensional code that is used to establish short-range wireless communication and that is provided by the self-service terminal, establishing, by the client, short-range wireless communication with the checkout terminal, and obtaining a shop identifier pushed by the checkout terminal.

Optionally, the method further includes the following: performing, by the checkout terminal, risk detection when receiving the payment code scanned by the client to perform payment; and notifying a shop staff member when there is a risk.

Optionally, the risk detection specifically includes the following: obtaining and recognizing products that are to be actually checked out by a customer and that are photographed by a photographing device; and determining that there is a risk when the products to be actually checked out by the customer are different from products in the shopping cart.

Optionally, the method further includes the following: when the products to be actually checked out by the customer are the same as the products in the shopping cart, determining whether a specified product exists in the products to be actually checked out by the customer; and determining that there is a risk when the specified product exists in the products to be actually checked out by the customer.

Optionally, the risk detection specifically includes the following: obtaining a first total weight, detected by a weighing device, of products to be actually checked out by a customer; calculating a second total weight based on weights and a quantity of products in the shopping cart; and determining that there is a risk when an absolute value of a difference between the first total weight and the second total weight exceeds a threshold.

Optionally, the risk detection specifically includes the following: recognizing products corresponding to radio frequency identification tags on products to be actually checked out by a customer; and determining that there is a risk when the products corresponding to the radio frequency identification tags are different from products in the shopping cart.

FIG. 7 describes a schematic diagram of internal function modules and a structure of the product checkout apparatus. Essentially, the product checkout apparatus can be an electronic device, including: a processor; and a memory, configured to store an instruction executable by the processor, where the processor is configured to implement the following method: scanning, by a client, a product barcode to enter a shopping cart interface, where the shopping cart interface is used to display product information obtained through barcode scanning; sending, by the client, a checkout request to a server when obtaining a checkout instruction, where the checkout request carries the product information of a shopping cart; and generating, by the server, a payment code based on the product information of the shopping cart when receiving the checkout request, and pushing the payment code to the client, so that the client displays the payment code for payment.

In the previous implementation of the electronic device, it should be understood that the processor can be a central processing unit (CPU), or can be another general-purpose processor, a digital signal processor (DSP), an application-specific integrated circuit (ASIC), etc. The general-purpose processor can be a microprocessor, or the processor can be any conventional processor, etc. The previous memory can be a read-only memory (ROM), a random access memory (RAM), a flash memory, a hard disk, or a solid-state disk. The steps of the methods disclosed in the implementations of the present disclosure can be directly performed by a hardware processor, or performed by a combination of hardware and software modules in a processor.

The implementations in the present specification are described in a progressive way. For same or similar parts of the implementations, references can be made to the implementations mutually. Each implementation focuses on a difference from other implementations. Particularly, an electronic device implementation is similar to a method implementation, and therefore is described briefly. For related parts, references can be made to related descriptions in the method implementation.

A person skilled in the art can easily figure out another implementation of the present specification after thinking over the specification and practicing the present disclosure here. The present specification is intended to cover any variations, uses, or adaptations of the present specification, and these variations, uses, or adaptations follow the general principles of the present specification and include common knowledge or conventional techniques that are not disclosed in the technical field of the present specification. The specification and the implementations are merely considered as examples, and the actual scope and the spirit of the present specification are pointed out by the following claims.

It should be understood that the present specification is not limited to the precise structures that have been described above and shown in the drawings, and various modifications and changes can be made without departing from the scope of the present specification. The scope of the present specification is limited by the appended claims only.

## Claims

1. A product checkout method, wherein the method comprises:
scanning, by a client, a product barcode to enter a shopping cart interface, wherein the shopping cart interface is used to display product information obtained through barcode scanning;
sending, by the client, a checkout request to a server when obtaining a checkout instruction, wherein the checkout request carries the product information of a shopping cart;
generating, by the checkout server, a payment code based on the product information of the shopping cart when receiving the checkout request, and pushing the payment code to a checkout terminal; and
displaying, by the checkout terminal, the received payment code, so that the client scans the payment code to complete payment.

2. The method according to claim 1, wherein the scanning, by a client, a product barcode to enter a shopping cart interface specifically comprises:
scanning, by the client, the product barcode to enter the shopping cart interface, and sending current location information to the server; and
the generating, by the server, a payment code based on the product information of the shopping cart when receiving the checkout request, and pushing the payment code to a checkout terminal specifically comprises:
determining, by the server based on the location information of the client when receiving the checkout request, a shop in which the client is currently located; and
generating, by the server, the payment code based on the product information of the shopping cart, and pushing the payment code to a checkout terminal in the determined shop.

3. The method according to claim 1, wherein the scanning, by a client, a product barcode to enter a shopping cart interface specifically comprises:
scanning, by the client, the product barcode to enter the shopping cart interface, and establishing short-range wireless communication with a current shop and obtaining a shop identifier; wherein
the checkout request further carries the shop identifier; and
the generating, by the server, a payment code based on the product information of the shopping cart when receiving the checkout request, and pushing the payment code to a checkout terminal specifically comprises:
determining, by the server based on the shop identifier when receiving the checkout request, a shop in which a customer is located; and
generating, by the server, the payment code based on the product information of the shopping cart, and pushing the payment code to a checkout terminal in the determined shop.

4. The method according to claim 1, wherein the checkout request further carries location information of the client; and
the generating, by the server, a payment code based on the product information of the shopping cart when receiving the checkout request, and pushing the payment code to a checkout terminal specifically comprises:
determining, by the server based on the location information of the client when receiving the checkout request, a shop in which a customer is located; and
generating, by the server, the payment code based on the product information of the shopping cart, and pushing the payment code to a checkout terminal in the determined shop.

5. The method according to claim 1, wherein the sending, by the client, a checkout request to a server when obtaining a checkout instruction specifically comprises:
establishing, by the client when obtaining the checkout instruction, short-range wireless communication with a current shop and obtaining a shop identifier; and
sending, by the client, the checkout request to the server, wherein the checkout request carries the shop identifier; and
the generating, by the server, a payment code based on the product information of the shopping cart when receiving the checkout request, and pushing the payment code to a checkout terminal specifically comprises:
determining, by the server based on the shop identifier when receiving the checkout request, a shop in which a customer is located; and
generating, by the server, the payment code based on the product information of the shopping cart, and pushing the payment code to a checkout terminal in the determined shop.

6. The method according to claim 3 or 5, wherein the establishing short-range wireless communication with a current shop and obtaining a shop identifier specifically comprises:
after scanning a two-dimensional code that is used to establish short-range wireless communication and that is provided by the checkout terminal, establishing, by the client, short-range wireless communication with the checkout terminal, and obtaining a shop identifier pushed by the checkout terminal.

7. The method according to claim 1, wherein the method further comprises:
performing, by the checkout terminal, risk detection when receiving the payment code scanned by the client to perform payment; and
notifying a shop staff member when there is a risk.

8. The method according to claim 7, wherein the risk detection specifically comprises:
obtaining and recognizing products that are to be actually checked out by a customer and that are photographed by a photographing device; and
determining that there is a risk when the products to be actually checked out by the customer are different from products in the shopping cart.

9. The method according to claim 8, wherein the method further comprises:
when the products to be actually checked out by the customer are the same as the products in the shopping cart, determining whether a specified product exists in the products to be actually checked out by the customer; and
determining that there is a risk when the specified product exists in the products to be actually checked out by the customer.

10. The method according to claim 7, wherein the risk detection specifically comprises:
obtaining a first total weight, detected by a weighing device, of products to be actually checked out by a customer;
calculating a second total weight based on weights and a quantity of products in the shopping cart; and
determining that there is a risk when an absolute value of a difference between the first total weight and the second total weight exceeds a threshold.

11. The method according to claim 7, wherein the risk detection specifically comprises:
recognizing products corresponding to radio frequency identification tags on products to be actually checked out by a customer; and
determining that there is a risk when the products corresponding to the radio frequency identification tags are different from products in the shopping cart.

12. A product checkout method, wherein the method comprises:
scanning, by a client, a product barcode to enter a shopping cart interface, wherein the shopping cart interface is used to display product information obtained through barcode scanning;
sending, by the client, a checkout request to a server when obtaining a checkout instruction, wherein the checkout request carries the product information of a shopping cart; and
generating, by the server, a payment code based on the product information of the shopping cart when receiving the checkout request, and pushing the payment code to the client, so that the client displays the payment code for payment.

13. A product checkout apparatus, wherein the apparatus comprises:
a scanning unit, configured for a client to scan a product barcode to enter a shopping cart interface, wherein the shopping cart interface is used to display product information obtained through barcode scanning;
a sending unit, configured for the client to send a checkout request to a server when obtaining a checkout instruction, wherein the checkout request carries the product information of a shopping cart;
a generation unit, configured for the checkout server to generate a payment code based on the product information of the shopping cart when receiving the checkout request, and push the payment code to a checkout terminal; and
a checkout unit, configured for the checkout terminal to display the received payment code, so that the client scans the payment code to complete payment.

14. A product checkout apparatus, wherein the apparatus comprises:
a scanning unit, configured for a client to scan a product barcode to enter a shopping cart interface, wherein the shopping cart interface is used to display product information obtained through barcode scanning;
a sending unit, configured for the client to send a checkout request to a server when obtaining a checkout instruction, wherein the checkout request carries the product information of a shopping cart; and
a generation unit, configured for the server to generate a payment code based on the product information of the shopping cart when receiving the checkout request, and push the payment code to the client, so that the client displays the payment code for payment.

15. An electronic device, comprising:
a processor; and
a memory, configured to store an instruction executable by the processor, wherein
the processor is configured to implement the method according to any one of claims 1 to 12.
